Europäisches Patentamt

European Patent Office

Office européen des brevets

(11) Publication number: **0 131 444**
**B1**

(12) **EUROPEAN PATENT SPECIFICATION**

(45) Date of publication of patent specification: **24.02.88**

(21) Application number: **84304620.2**

(22) Date of filing: **05.07.84**

(51) Int. Cl.⁴: **B 23 K 35/36, B 23 K 35/34, B 23 K 1/12, F 28 F 21/08**

(54) Heat exchanger and method of manufacturing same.

(30) Priority: **06.07.83 JP 122654/83**

(43) Date of publication of application:
**16.01.85 Bulletin 85/03**

(45) Publication of the grant of the patent:
**24.02.88 Bulletin 88/08**

(84) Designated Contracting States:
**DE FR GB**

(56) References cited:
**GB-A- 586 194**
**US-A-2 299 164**
**US-A-3 951 328**
**WELDING JOURNAL, vol. 57, no. 12, December 1978, pages 23-28, Miami, USA; W.E. COOKE et al.: "Furnace brazing of aluminum with a non-corrosive flux"**
**PATENTS ABSTRACTS OF JAPAN, vol. 7, no. 283(M-263)(1428), 16th December 1983; & JP -A- 58 159 995**
**PATENTS ABSTRACTS OF JAPAN, vol. 7, no. 275(M-261)(1420), 8th December 1983; & JP -A- 58 154 456**

(73) Proprietor: **HITACHI, LTD.**
**6, Kanda Surugadai 4-chome Chiyoda-ku Tokyo 100 (JP)**

(72) Inventor: **Haramaki, Takashi**
**2118-77 Muramatsu Toukai-mura**
**Naka-gun Ibaraki-ken (JP)**
Inventor: **Shiota, Katsuhiko**
**1268-9 Muramatsu Toukai-mura**
**Naka-gun Ibaraki-ken (JP)**
Inventor: **Kokura, Satoshi**
**438-7 Kamesaku-cho**
**Hitachiohta-shi Ibaraki-ken (JP)**
Inventor: **Funamoto, Takao**
**6-10-35 Ayukawa-cho**
**Hitachi-shi Ibaraki-ken (JP)**
Inventor: **Tomita, Akira**
**2649-75 Motoyoshida-cho**
**Mito-shi Ibaraki-ken (JP)**

(74) Representative: **Paget, Hugh Charles Edward et al**
**MEWBURN ELLIS & CO. 2/3 Cursitor Street London EC4A 1BQ (GB)**

Courier Press, Leamington Spa, England.

## Description

This invention relates to a heat exchanger made by connecting, by brazing, metal members, and to a method of manufacture of such a heat exchanger.

Heat exchangers used in, for example, domestic air conditioners, refrigerators, and automobile air conditioners, utilize a fluid flowing as a cooling medium or a heating medium through a metal passage provided with a large fluid-contact area. When it is attempted to increase the fluid-contact area of the metal passage, the shape of the metal parts forming the passage inevitably becomes complicated. In one heat exchanger consisting of tubes and fins which are provided to increase the fluid-contact area of the fluid passages, the tubes are located in holes and grooves formed in the fins. The tubes are then expanded by mechanical force to attach the tubes and fins to each other. The tubes fitted firmly into the fins are connected together by attaching U-shaped tubes, which have been molded in advance, to end portions of the tubes. Flux consisting of a chloride is used for brazing the joints between the tubes fitted into the fins and the U-shaped tubes.

This heat exchanger consisting of fins and tubes is thus manufactured in two connection steps. In the first step, the fins and tubes are joined together mechanically, and in the second step these tubes and U-shaped tube are brazed together. When viewed microscopically, the mechanical connections between the fins and tubes is a contact between the oxide films formed on the materials thereof. This reduces the rate of transfer of heat between the fins and tubes.

Gaps tend to occur between the mechanically-connected portion of the fins and tubes because of vibrations generated while the heat exchanger is being transported and because of the heat cycle to which it is subjected after it has been manufactured. This also results in a large reduction in the heat transfer rate of the fins and tubes. During the manufacture of a corrugated heat exchanger which must have a high corrosion-resistance, there is used a flux to which $ZnCl_2$ has been added. Since a corrugated heated exchanger has fins of complicated shape, it must be subjected to many processing steps, such as a cleaning step and an acid-washing step after the brazing step. Moreover, the residual $ZnCl_2$ cannot be removed completely.

US—A—3 951 328 proposes a method of brazing aluminium using a corrosion-resistant flux of a fluoride which is intended to eliminate the problems mentioned above. The flux consists of a compound of $K_3AlF_6$ and $KAlF_4$ and is obtained by melting and mixing together KF and $AlF_3$. This fluoride flux has a low hygroscopicity, so that it is unnecessary to remove the flux remaining on the joint surfaces of the heat exchanger after the brazing step. Although the residual flux has no corrosive components, there is still room for improvement in the boring corrosion resistance of such a heat exchanger.

Thus the document proposes a method of manufacturing a heat exchanger by brazing metal members mainly made of aluminium or aluminium alloy, comprising the following steps:

(a) making a heat exchanger combination by assembling a plurality of metal members, at least one of said metal members being made of a brazing sheet clad with a brazing material;

(b) depositing an aqueous solution consisting essentially of a fluoride flux, to brazed portions of said metal members or the whole surface of said heat exchanger combination; and

(c) heating said heat exchanger combination on which said fluoride flux is deposited and brazing said brazed members in a furance in a nitrogen gas atmosphere.

It therefore corresponds to the pre-characterising part of the claims.

An object of the present invention is to provide a method of manufacturing a heat exchanger which can have a high heat conductivity and a high boring corrosion resistance, and which may be manufactured in a simple manner.

The present inventors have discovered that, when a suitable corrosion-resistant flux containing a metal component which can form a corrosion-inhibiting metal film is used to braze together fins and tubes, at least one of which consists of brazing sheet clad with a brazing material, a heat exchanger with an extremely high thermal efficiency and good boring corrosion resistance can be obtained.

Therefore according to one aspect of the present invention, the fluoride flux consists essentially of 25 to 40% by weight of KF, 38 to 54% by weight of $AlF_3$, 3 to 30% by weight of $ZnF_2$, and up to 9% by weight of at least one of LiF, NaF, $MgF_2$, and $CaF_2$, such that the total composition adds up to 100% and forms a corrosion-inhibiting aluminium-zinc alloy film which is a sacrificial film formed overall on the surface of said heat exchanger.

According to a second aspect of the present invention, the fluoride flux consists essentially of 32—36% by weight KF, 44—50% by weight $AlF_3$, 7—15% by weight $ZnF_2$ and 3—6% by weight of LiF or 1—2% by weight of one of NaF, $MgF_2$ and $CaF_2$, and forms a corrosion-inhibiting aluminium-zinc alloy film which is a sacrificial film formed overall on the surface of said heat exchanger.

When a flux containing $ZnF_2$ is used to braze the members such as fins and tubes of Al, the $ZnF_2$ decomposes at the brazing temperature, and the metal Zn covers the brazed portions or the whole surface of the heat exchanger, so that the boring corrosion-resistance of the Al can be improved. Zn is a base with respect to Al and corroded sacrificially in a corrosive environment. This gives protection of the Al from corrosion.

LiF, NaF, $MgF_2$ and $CaF_2$ can improve the wetting of the flux during brazing to increase brazing efficiency. However, when less than 0.5% by weight of these substances is added to the flux, the wetting of the flux may not be improved sufficiently, and, when more than 9% by weight of these substances is added, the melting point of the flux may increase too much. A flux with a particularly preferred range of components contains 32—36% KF, 44—50% $AlF_3$, 7—15% $ZnF_2$, and 3—6% LiF. This flux melts below 600°C and is greatly activated at the brazing temperature. The particularly preferred amount of NaF, $MgF_2$ and $CaF_2$, when added instead of LiF, is within the range 1 to 2% by weight.

A fluoride flux as described above may be manufactured in various ways. Methods of manufacturing such a flux include, for example, (a) melting a mixture of KF, $AlF_3$, $ZnF_2$ and an additional compound (i.e. LiF etc) of a predetermined composition, cooling the melt to solidify it, and then pulverizing the resultant product, (b) mixing a product obtained by melting $ZnF_2$ and LiF, then cooling and pulverizing it, and (c) agitating KF, $AlF_3$, $ZnF_2$ and LiF in water to form a creamy mixture, and drying the mixture to obtain a powdered product.

The fluoride flux prepared using the mixture of raw materials, i.e. KF, $AlF_3$, $ZnF_2$ and LiF, may have one of the following crystalline structures. A powder prepared from a molten mixture of these four materials contains compounds including $K_3Zn_2F_7$, $KAlF_4$, $K_3AlF_6$ and $K_2LiAlF_6$; a powder prepared from a mixture obtained by agitating a molten mixture of KF and $AlF_3$ and a molten mixture of $ZnF_2$ and LiF together contains compounds including $KAlF_4$, $K_3AlF_6$, $ZnF_2$ and LiF; and a powder prepared from a mixture obtained by agitating the four components in water to form a creamy mass, and then drying the mass, contains compounds including $K_3AlF_6$, $K_2LiAlF_6$, $KZnF_3$, $ZnF_2$, KF and $AlF_3$. These compounds have a very low hygroscopicity, and this property of the compounds further improves the corrosion resistance of the heat exchanger with respect to water.

In one typical process of manufacture of a heat exchanger according to the invention, an aqueous solution containing 6—30% by weight of a fluoride flux prepared by any of the above methods is applied over the whole surface, or the joint portions only, of a heat exchanger which consists of fins and tubes, and the resultant heat exchanger is dried to remove the water therefrom. Then the heat exchanger is brazed in an electric furnace in an atmosphere of a non-oxidizing gas, particularly $N_2$ gas, of which the dew point has been regulated to not more than −15°C. As a result, a heat exchanger which has been brazed efficiently and which has a high thermal efficiency is obtained. There is a correlation between the dew point of the brazing atmosphere and the concentration of the flux, and these values should be within a range which enables the brazing to be carried out satisfactorily. Using the flux in the form of an aqueous solution of a predetermined concentration is advantageous from various points of view; it ensures that the required quantity of sacrificial film is formed on the surface of a heat exchanger, the cost of the heat exchanger can be reduced and the heat exchanger can be braze-finished attractively. It has been ascertained that the surface of a heat exchanger thus subjected to the application of the flux including KF, $AlF_3$, $ZnF_2$ and LiF and brazing contains compounds such as $K_2LiAlF_6$, $KAlF_4$, Zn and ZnO.

Embodiments of the invention will now be described by way of example with reference to the accompanying drawings in which:—

Figure 1 is a longitudinal section of one embodiment of a heat exchanger according to the present invention;

Figure 2 is an enlarged view of part A of Figure 1;

Figure 3 is an enlarged view of part B of Figure 1;

Figure 4 is a perspective view of another embodiment of a heat exchanger according to the present invention;

Figure 5 is an enlarged view of part C of Figure 4;

Figure 6 is a graph comparing the results of the experiments of Example 1 of the present invention and of an example of a conventional heat exchanger;

Figure 7 is a partially sectioned, longitudinal elevation of yet another embodiment of a heat exchanger according to the present invention;

Figure 8 is a general perspective view of the heat exchanger of Figure 7; and

Figure 9 is a general perspective view of a further embodiment of a heat exchanger according to the present invention.

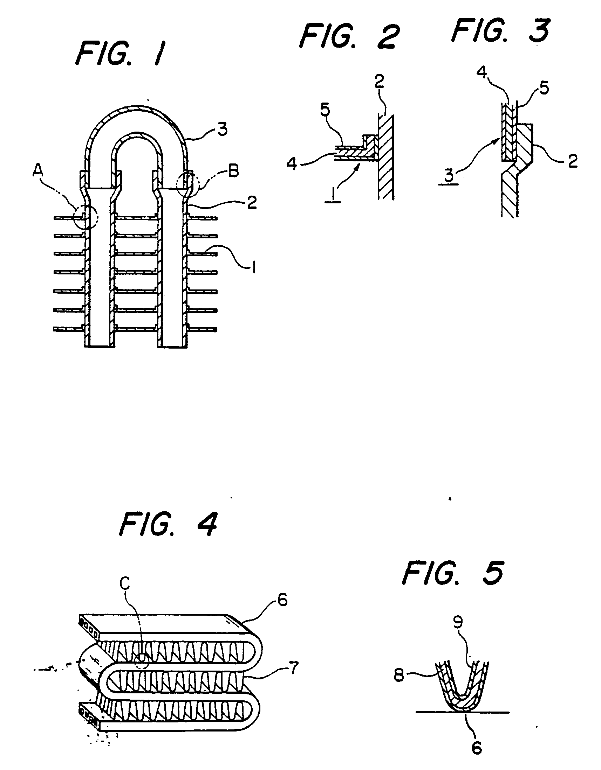

An example (Example 1) of a heat exchanger part embodying the invention and consisting of fins 1 and tubes 2 will now be described with reference to Figure 1. Each of the fins 1, which are a plurality of plate members, has holes in which the tubes 2 are inserted and attached thereto. A U-shaped tube 3 connecting the tubes together is joined to end portions of the two tubes 2. The fins 1 and U-shaped tube 3 are each made of a brazing sheet which is made by coating the surface of a core material 4 composed mainly of Al with an Al—Si brazing material 5 as shown in Figures 2 and 3. Each fin 1 consists of a core material of aluminium alloy A3003 (Al-1.2% Mn) and a brazing material of Al-Si alloy A4343 (Al-6.8—8.2% Si-0.25% Cu-0.8% Fe-0.2% Zn-0.1% Mg), and has dimensions of 40×60×0.2 mm. Each tube 2 consists of aluminium A1050 (more than 99.5% Al) and has dimensions of 8Ø×1 mm. The U-shaped tube 3 consists of a core material of Al050 and a brazing material of A4343. Combinations of these metal members were immersed in an aqueous solution having a flux concentration of 6—30% (weight ratio). The combinations of metal members were then dried to evaporate the water from them. The products thus obtained were heated to 615°C and brazed in an electric furnace in which the dew point of $N_2$ was not more than −15°C. The flux used in this Example consisted of 37% by weight KF, 49% by weight $AlF_3$ and 14% by weight $ZnF_2$.

An example (Example 2) of another type of heat exchanger consisting of fins and tubes is shown in

3

**0 131 444**

Figure 4; this type of heat exchanger is called a corrugated heat exchanger. In this heat exchanger, fins 7 are provided between flat tubes 6, and these parts are connected to one another at their contact points. Each fin 7 consists of a brazing sheet which is made by coating the surface of a core material (A3003) 8 which contains Al as main component with an Al-Si brazing material (A4343) 9 as shown in Figure 5. Each fin has dimensions of $50 \times 0.17$ mm (cross-section, fin length; 20 mm), and each flat tube 6 has dimensions of $50 \times 4$ holes $\times 1$ mm (cross-section). Combinations of these metal members arranged in three stages were immersed in an aqueous solution of a concentration of flex of 6—30% (weight ratio). The combinations of metal members were then dried to evaporate the water from them. The products thus obtained were heated to 615°C and brazed in an electric furnace in which the dew point of $N_2$ was not more than −15°C. The flux used in this example consisted of 34% by weight KF, 46% by weight $AlF_3$, 14% by weight $ZnF_2$, and 6% by weight LiF.

A comparative example will now be described. Heat exchangers (Comparative Example 1) of the same shape as that of the heat exchangers of Example 1 were prepared, the fins and tubes of which were of A1050 with no film of brazing material thereon. The tubes were connected together by brazing with chloride flux.

Other heat exchangers (Comparative Example 2) of the same shape and materials (brazing sheet) as the heat exchangers of Example 1 were also prepared. The heat exchangers of this Comparative Example differed from those of Example 1 in that the former were brazed in an electric furnace with flux consisting of 46% by weight KF and 54% by weight $AlF_3$.

The brazing characteristics of the heat exchangers made by brazing fins and tubes together are rated according to the properties of the fillets formed at the contact portions thereof. Corrosion was tested by the CAS test of JIS H8601 for 150 hours.

The brazing characteristics of the heat exchangers and the state of the corrosion-inhibiting region formed on the heat exchangers, with respect to various concentrations of flux and various gas dew points, are given in Table 1. The corrosion-inhibiting regions correspond substantially to immobile portions of, for example, stainles steel, and these have a film thereon which can reduce the progress of corrosion to a great extent. The determination of the brazing characteristics and the state of corrosion-inhibiting regions was done in an aqueous solution containing 3% NaCl. Test pieces were made by cutting off parts of the heat exchangers.

TABLE 1

| Sample No. | | Concentration (wt.%) of flux | Dew point (°C) in the furnace | Brazing characteristics | Formation of corrosion-inhibiting region |
|---|---|---|---|---|---|
| Example 1 | 1 | 3 | −15 | △ | X |
| | 2 | 6 | −15 | ◯ | △ |
| | 3 | 10 | −30 | ◯ | ◯ |
| Example 2 | 4 | 3 | −15 | △ | X |
| | 5 | 6 | −15 | ◯ | △ |
| | 6 | 10 | −30 | ◯ | ◯ |
| Comparative Example 2 | 7 | 3 | −15 | △ | X |
| | 8 | 10 | −30 | ◯ | X |

Brazing characteristics:
  △ Rather poor fillet formation
  ◯ Good fillet formation

Formation of corrosion-inhibiting regions:
  X Not formed
  △ Formed to some extent
  ◯ Formed satisfactory

The results show that, when the flux of a concentration of 6% is used with the dew point of the gas at not more than −15°C, a heat exchanger with excellent brazing characteristics is obtained. The same

4

substantially applies to the heat exchangers of the Comparative Example. However, no corrosion-inhibiting region which has been predicted to provide boring corrosion resistance for a heat exchanger, is formed on the heat exchangers made by the brazing method employed in the Comparative Example, even when the concentration of the flux and the dew point in the furnace are reduced. On the other hand, in both Examples 1 and 2 of the present invention, a corrosion-inhibiting region is formed when the concentration of the flux and the dew point in the furnace are 10% and −30°C, respectively. This will certainly ensure that these heat exchangers have a high boring corrosion resistance.

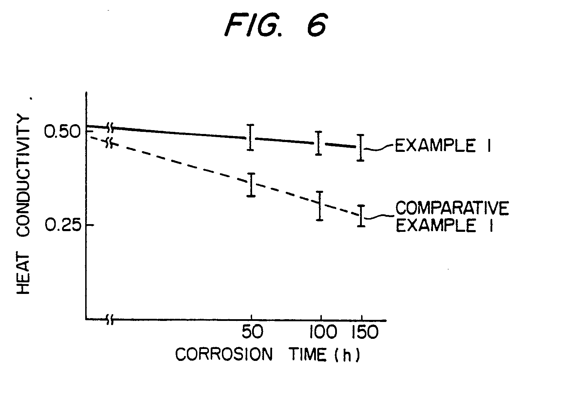

In order to estimate the thermal efficiency of each heat exchanger on the bases of the heat conductivity thereof, the heat conductivity (cal/cm$^2$/cm/sec/°C) thereof was measured. Each sample was taken out at predetermined corrosion times (h) and fin was cut therefrom. The samples used were the heat exchanger represented by No. 3 in Table 1 and the heat exchanger of Comparative Example 1. The heat conductivity of twelve samples taken from these heat exchangers were measured. The results of the measurement are shown in Figure 6. As is clear from Figure 6, the heat conductivity of the heat exchanger of Comparative Example 1 is rather low at an initial stage of the corrosion thereof, and decreases gradually as corrosion time progresses. In contrast the thermal conductivity of heat exchanger No. 3 of Example 1 is high at an initial stage of the corrosion thereof, and varies little even as the corrosion time progresses, i.e. the degree of corrosion of this heat exchanger is low. In view of this, it is clear that this heat exchanger according to the present invention has a high thermal efficiency.

The depth of the boring corrosion in the tubes which occurred during the 150h corrosion test was 0.8—1.0 mm in the heat exchanger of Comparative Example 1, and 0.7—0.9 mm in the heat exchanger corresponding to sample No. 8 of Comparative Example 2 in Table 1. On the other hand, Samples Nos. 3 and 6 of Example 1 in Table 1 were both generally corroded, but the depths of corrosion in these samples were as little as 0.1—0.3 mm. As can be understood from these results, the boring corrosion resistance of these heat exchangers according to the present invention proved to be high.

The fluoride flux-coating method employed in the examples of the present invention is carried out with the metal members immersed in an aqueous solution of the fluoride flux. This means that the heat exchanger as a whole can be brazed unitarily, and heat exchangers can be easily mass-produced. Besides this flux-coating method which is carried out by immersing the metal members in an aqueous solution of the flux, methods in which an aqueous solution of the flux is sprayed onto the metal members or is applied thereto with a brush can alternatively be employed in the present invention.

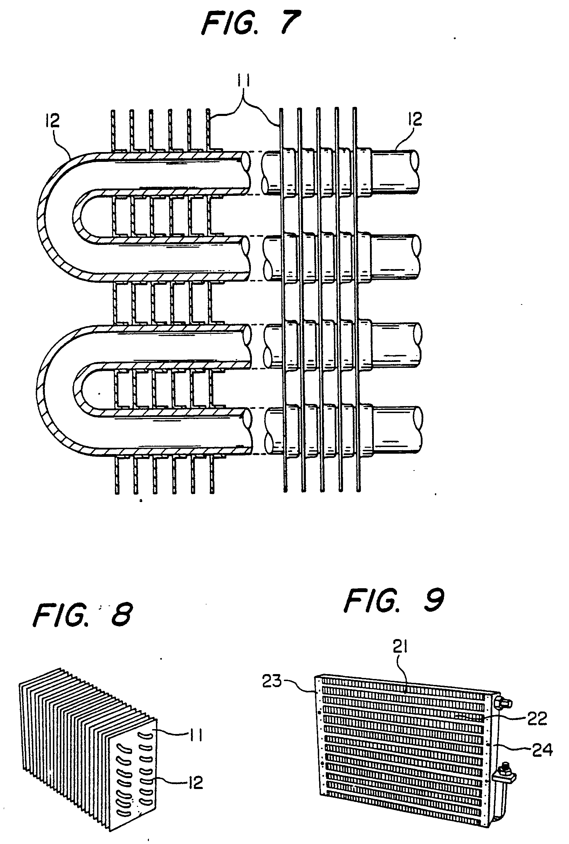

The construction of the heat exchanger according to the present invention is not limited to those shown in Figures 1 and 4; the present invention can also be applied for example to the heat exchanger whose construction is shown in Figures 7 and 8. In the heat exchanger shown in Figures 7 and 8, a plurality of U-shaped tubes 12 are inserted through a plurality of regularly-arranged rectangular plate fins 11 provided with a plurality of holes, and are attached thereto. Referring to the drawings, reference numeral 13 denotes projections for separating the plate fins 11 from one another at a predetermined distance. The present invention can also be applied to a heat exchanger whose construction is shown in Figure 9. In this heat exchanger, fins 22 are made of thin metal plates and are provided between tubes 21. The tubes 21 are connected to end boxes 23 and 24. They are brazed to one another at contact point thereof. Gaps between the plurality of fins 22 form fluid passages.

To summarise, by the invention as described above, a heat exchanger as a whole can be brazed unitarily, and there is little possibility of the occurrence of gaps in the brazed portions thereof. A film with a corrosion-inhibiting capability is formed over the surface of the brazed portions, so that the heat exchanger has a high heat conductivity and corrosion resistance. Since no chloride flux is used in the brazing in the present invention, it is unnecessary to carry out a cleaning step after the brazing has been completed.

## Claims

1. A method of manufacturing a heat exchanger by brazing metal members mainly made of aluminium or aluminium alloy, comprising the following steps:
   (a) making a heat exchanger combination by assembling a plurality of metal members, at least one of said metal members being made of a brazing sheet clad with a brazing material;
   (b) depositing an aqueous solution consisting essentially of a fluoride flux, to brazed portions of said metal members or the whole surface of said heat exchanger combination; and
   (c) heating said heat exchanger combination on which said fluoride flux is deposited and brazing said brazed members in a furnace in a nitrogen gas atmosphere; characterised in that:
   said fluoride flux consists essentially of 25 to 40% by weight of KF, 38 to 54% by weight of AlF$_3$, 3 to 30% by weight of ZnF$_2$, and up to 9% by weight of at least one of LiF, NaF, MgF$_2$, and CaF$_2$, such that the total composition adds up to 100% and forms a corrosion-inhibiting aluminium-zinc alloy film which is a sacrificial film formed overall on the surface of said heat exchanger.

2. A method according to Claim 1 wherein said deposition step comprises immersing said heat exchanger combination in an aqueous solution of said fluoride flux of 6—30% by weight, and then drying said heat exchanger combination.

3. A method according to Claim 1, wherein said fluoride flux has at least 0.5% by weight of at least one of LiF, NaF, MgF$_2$ and CaF$_2$.

4. A method of manufacturing a heat exchanger by brazing metal members mainly made of aluminium of aluminium alloy comprising the following steps:

(a) making a heat exchanger combination by assembling a plurality of metal members, at least one of said metal members being made of a brazing sheet clad with a brazing material:

(b) depositing an aqueous solution consisting essentially of a fluoride flux to brazed portions of said metal members or the whole surface of said heat exchanger combination; and

(c) heating said heat exchanger combination on which said fluoride flux is deposited and brazing said brazed members in a furnace in a nitrogen gas atmosphere characterised in that:

said fluoride flux consists essentially of 32—36% by weight KF, 44—50% by weight $AlF_3$, 7—15% by weight $ZnF_2$ and 3—6% by weight of LiF or 1—2% by weight of one of NaF, $MgF_2$ and $CaF_2$, and forms a corrosion-inhibiting aluminium-zinc alloy film which is a sacrificial film formed overall on the surface of said heat exchanger.

**Patentansprüche**

1. Methode zur Herstellung eines Wärmeaustauschers durch Hartverlöten von Metallteilen, die hauptsächlich aus Aluminium oder Aluminiumlegierung hergestellt sind, die folgende Schritte beinhaltet:

(a) Herstellung einer Wärmeaustauscherkombination durch Zusammenfügen einer Vielzahl von Metallteilen, wobei wenigstens einer der Metallteile aus einem Hartlötblech hergestellt ist, das mit Hartlötmaterial überzogen ist;

(b) Aufbringen einer wässrigen Lösung, bestehend im wesentlichen aus einem fluoridhaltigen Flußmittel, auf die mit Hartlötmittel überzogenen Teile besagter Metallteile, oder auf die gesamte Oberfläche der besagten Wärmeaustauscherkombination; und

(c) Erhitzen der Wärmeaustauscherkombination auf die das fluoridhaltige Flußmittel aufgebracht ist, und Hartverlöten besagter hartlötmittelüberzogener Teile im Ofen unter Stickstoffatmosphäre;

dadurch gekennzeichnet, daß das fluoridhaltige Flußmittel im wesentlichen aus 25 bis 40 Gew.-% KF, 38 bis 54 Gew.-% $AlF_3$, 3 bis 30 Gew.-% $ZnF_2$ und bis zu 9 Gew.-% wenigstens eines der Salze LiF, NaF, $MgF_2$, $CaF_2$ besteht, so daß die Gesamtzusammensetzung 100% beträgt und einen korrosionshemmenden Aluminiumzink-Legierungsfilm bildet, welcher als ein schützender Film auf der gesamten Oberfläche des Wärmeaustauschers ausgebildet wird.

2. · Eine Methode nach Anspruch 1, worin der Aufbringungsschritt bedeutet, daß die Wärmeaustauscherkombination in eine wässerige Lösung aus 6 bis 30 Gew.-% eines fluoridhaltigen Flußmittels getaucht wird, und anschließend die Wärmeaustauscherkombination getrocknet wird.

3. Eine Methode nach Anspruch 1, worin das fluoridhaltige Flußmittel mindestens 0,5 Gew.-% wenigstens eines der Salze LiF, NaF, $MgF_2$ und $CaF_2$ enthält.

4. Methode zur Herstellung eines Wärmeaustauschers durch Hartverlöten von Metallteilen, die hauptsächlich aus Aluminium oder Aluminiumlegierungen hergestellt sind, die folgende Schritte beinhaltet:

(a) Herstellung einer Wärmeaustauscherkombination durch Zusammenfügen einer Vielzahl von Metallteilen, wobei wenigstens einer der Metallteile aus einem Hartlötblech hergestellt ist, das mit Hartlötmaterial überzogen ist;

(b) Aufbringen einer wässerigen Lösung, bestehend im wesentlichen aus einem fluoridhaltigen Flußmittel auf die hartlötmittelüberzogenen Teile besagter Metallteile, oder auf die gesamte Oberfläche der Wärmeaustauscherkombination; und

(c) Erhitzten der Wärmeaustauscherkombination, auf die das fluoridhaltige Flußmittel aufgebracht ist, und Hartverlöten der hartlötmittelüberzogenen Teile im Ofen unter Stickstoffatmosphäre;

dadurch gekennzeichnet, daß das fluoridhaltige Flußmittel im wesentlichen aus 32 bis 36 Gew.-% KF, 44 bis 50 Gew.-% $AlF_3$, 7 bis 15 Gew.-% $ZnF_2$ und 3 bis 6 Gew.-% LiF oder 1 bis 2 Gew.-% eines der Salze NaF, $MgF_2$, $CaF_2$ enthält, und einen korrosionshemmenden Aluminiumzink-Legierungsfilm bildet, welcher als ein schützender Film auf der gesamten Oberfläche des Wärmeaustauschers ausgebildet wird.

**Revendications**

1. Procédé pour fabriquer un échangeur de chaleur par brasage d'éléments métalliques réalisés principalement en aluminium ou en un alliage d'aluminium, incluant les étapes suivantes:

(a) réaliser un ensemble combiné formant échangeur de chaleur par assemblage d'une pluralité d'éléments métalliques, au moins l'un desdits éléments métalliques étant constitué par un revêtement en tôle de brasage avec un matériau de brasage;

(b) déposer une solution aqueuse constituée essentiellement par un flux formé de fluorures, sur des parties brasées desdits éléments métalliques ou sur l'ensemble de la surface dudit ensemble combiné formant échangeur de chaleur; et

(c) chauffer ledit ensemble combiné formant échangeur de chaleur, sur lequel ledit flux formé de fluorures est déposé et braser lesdits éléments brasées dans un four dans une atmosphère de gaz azote; caractérisé en ce que:

ledit flux formé de fluorures est constitué essentiellement par 25 à 40% en poids de KF, 38 à 54% en

6

**0 131 444**

poids de AlF$_3$, 3 à 30% en poids de ZnF$_2$ et jusqu'à 9% en poids d'au moins l'un de LiF, NaF, MgF$_2$ et CaF$_2$, de sorte que l'ensemble de la composition fournit 100% et forme une pellicule d'alliage d'aluminium-zinc empêchant la corrosion et qui est une pellicule sacrificielle formée sur l'ensemble de la surface dudit échangeur de chaleur.

2. Procédé selon la revendication 1, selon lequel ladite étape de dépôt inclut l'immersion dudit ensemble combiné formant échangeur de chaleur dans une solution aqueuse dudit flux formé de fluorures intervenant pour 6—30% en poids, puis le séchage dudit ensemble combiné formant échangeur de chaleur.

3. Procédé selon la revendication 1, caractérisé en cé que ledit flux formé de fluorures comporte au moins 0,5% en poids d'au moins l'un de LiF, NaF, MgF$_2$ et CaF$_2$.

4. Procédé de fabrication d'un échangeur de chaleur par brasage d'éléments métalliques constitués principalement par de l'aluminium ou un alliage d'aluminium, comprenant les étapes suivantes:

(a) réaliser un ensemble combiné formant échangeur de chaleur par assemblage d'une pluralité d'éléments métalliques, au moins l'un desdits éléments métalliques étant constitué par un revêtement en tôle de brasage avec un matériau de brasage;

(b) déposer une solution aqueuse constituée essentiellement par un flux formé de fluorures, sur des parties brasées desdits éléments métalliques ou sur l'ensemble de la surface dudit ensemble combiné formant échangeur de chaleur; et

(c) chauffer ledit ensemble combiné formant échangeur de chaleur, sur lequel ledit flux formé de fluorures est déposé et braser lesdits éléments brasés dans un four dans une atmosphère de gaz azote; caractérisé en ce que

ledit flux formé de fluorures est constitué essentiellement par 32—36% en poids de KF, 44—50% en poids de AlF$_3$, 7—15% en poids de ZnF$_2$ et 3—6% en poids de LiF ou 1—2% en poids de l'un de NaF, MgF$_2$ et CaF$_2$, et forme une pellicule d'alliage d'aluminium-zinc empêchant la corrosion et qui est une pellicule sacrificielle formée sur l'ensemble de la surface dudit échangeur de chaleur.

7

## FIG. 1

## FIG. 2

## FIG. 3

## FIG. 4

## FIG. 5

# FIG. 6

*FIG. 7*

*FIG. 8*

*FIG. 9*